# EUROPEAN PATENT SPECIFICATION

(11) **EP 0 857 645 B1**
(45) Date of publication and mention of the grant of the patent: **03.12.2003**
(21) Application number: 97300847.7
(22) Date of filing: 10.02.1997
(51) Int. Cl.: B62L 3/02

(54) **Bicycle brake operating device**
Fahrrad-Bremsbetätigungsvorrichtung
Dispositif d'actionnement d'un frein de bicyclette

(43) Date of publication of application: 12.08.1998
(73) Proprietor: Shimano Inc., Osaka 590-0824 (JP)
(72) Inventor: Nakashima, Yuji, Sakai, Osaka 590 (JP); Sakashita, Tsuyoshi, Sakai, Osaka 590 (JP)
(74) Representative: Pacitti, Paolo

(56) References cited:
- EP-A- 0 435 248
- EP-A- 0 731 019
- US-A- 5 279 179
- US-A- 5 448 927

## Description

The present invention is directed to bicycle brake operating devices and, more specifically, to a bicycle brake operating device where a pivoting lever is connected to a force transmission element for operating the bicycle brake.

Brake operating devices which are used to operate bicycle brake devices are usually mounted on the handlebars of bicycles. Generally, such brake operating devices have a bracket which can be attached to the handlebar, and an operating lever which is pivotally supported at one end on the bracket. A wire which is used to drive the brake device is anchored to the operating lever via an anchoring member.

Devices which are designed so that the operating force and operating stroke in such brake operating devices can be altered as desired by the operator have already been proposed. For example, such devices are designed so that the lever ratio can be altered by altering the distance between the centre of rotation of the operating lever and the anchored portion of the wire. Here, the term "lever ratio" refers to the ratio L/h obtained by dividing the distance L between the centre of rotation of the operating lever and the operating point (i.e. the point where the operator actually grips the operating lever and applies an operating force) by the distance h between the centre of rotation and the wire anchoring point.

If it is desired to obtain a strong braking force, i.e. a strong wire pulling force, by means of a light operating force, it is necessary to increase the lever ratio. The lever ratio can be increased by changing the position of the wire anchoring point so that the distance between the centre of rotation of the operating lever and the wire anchoring point is reduced. In this case, however, the pulling rate of the wire (i.e. the amount of movement of the wire relative to the operating angle of the operating lever) is reduced compared to a case where the lever ratio is small. If the pulling rate of the wire is reduced, the operating lever may contact the handlebar before the brake acts sufficiently.

Accordingly, devices which are designed so that the wire anchoring.point can be altered during the brake operating process have been proposed, as disclosed in Japanese Laid-Open Patent Application No H3-292280. In this device, the lever ratio varies with the operation of the operating lever. As a result, a large braking force can be obtained by means of a small operating force, while the pulling rate of the wire is maintained. Unfortunately, the rate of variation in the brake operating force during the brake lever operating process, and the final brake operating force, are determined in a fixed manner. Accordingly, the feeling of brake operation cannot be adjusted to suit the user.

EP 0 731 019 discloses a brake operating device according to the preamble of claim 1.

According to the present invention there is provided a bicycle brake operating device according to claim 1. In certain embodiment, the stopper may comprise a first stopper element adapted to be disposed in the slot, wherein the first stopper element is adapted to define the first retaining opening at a first end of the slot for retaining the anchoring member towards the first end of the slot; and a second stopper element adapted to be disposed in the slot, wherein the second stopper element is adapted to define the second retaining opening at a second end of the slot for retaining the anchoring member towards the second end of the slot.

Preferred features are defined in the dependent claims. An embodiment of the invention will now be described, by way of example only, with reference to the accompanying drawings in which:
Figure 1 is a plan view of a particular embodiment of a brake operating device known from EP-A-731019;
Figure 2 is a schematic view illustrating the operation of the brake operating device shown in Figure 1;
Figure 3 is a schematic view illustrating the wire pulling rate of the brake operating device shown in Figure 1;
Figure 4 is a plan view of an alternative embodiment of a brake operating device known from EP-A-731019;
Figure 5 is a cross-sectional view of a particular embodiment of an adjustment mechanism shown in Figure 4;
Figure 6 is a plan view of another embodiment of a brake operating device known from EP-A-731019; and
Figures 7A - 7C are views of an embodiment of a brake operating device according to the present invention.

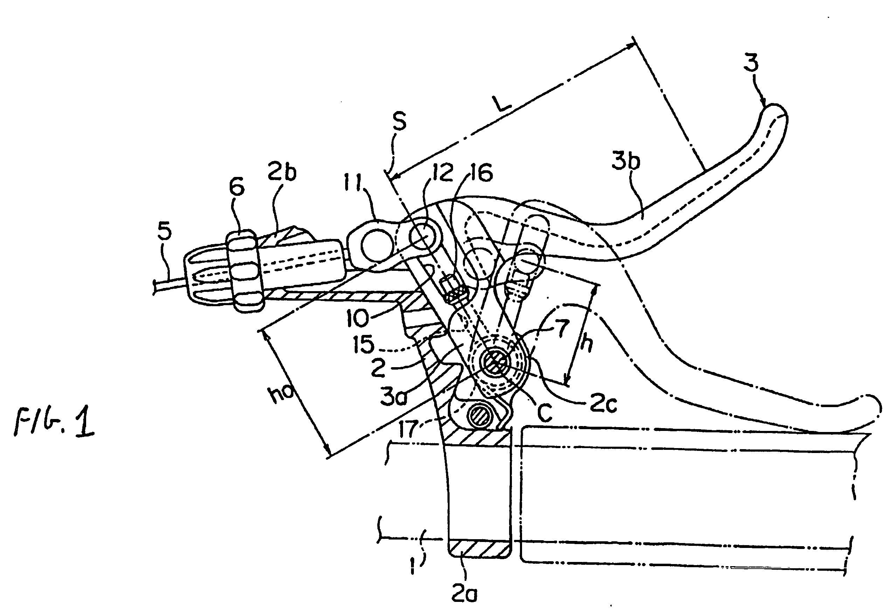

Figure 1 is a plan view of a particular embodiment of a brake operating device. The bicycle brake operating device shown in Figure 1 has a bracket 2 which is attached to the handlebar 1 of a bicycle, and an operating lever 3 which is supported at one end on the bracket 2 so that the operating lever 3 is free to pivot. The bracket 2 is formed on a reverse "L" shape. A tubular portion 2a which is fitted over the handlebar 1 is formed on one end of the bracket 2, while a wire attachment portion 2b on which a wire supporting member 6 which is used to support a brake wire 5 is mounted is formed on the other end of the bracket 2. Furthermore, a lever supporting portion 2c which is used to support the operating lever 3 is formed in the vicinity of the tubular portion 2a.

The operating lever 3 has a supporting portion 3a, one end of which is supported by the lever supporting portion 2c of the bracket 2 so that the operating lever 3 is free to pivot, and an operating portion 3b which extends toward the side from the other end of the supporting portion 3a. The supporting portion 3a is attached to the bracket 2 by means of a pin 7. A slot 10 which extends toward the centre of rotation C of the operating lever 3 is formed in the supporting portion 3a. The centre line of this slot 10 (with respect to the width of the slot) intersects the centre of rotation C. A wire anchoring member 11 is slidably disposed in the slot 10 of the operating lever 3 via an anchoring pin 12. The end portion of a brake wire 5 is anchored to the wire anchoring member 11.

A screw hole 15 which extends toward the centre of rotation C from one end of the slot 10 is formed in the operating lever 3, and a screw 16 is screwed into this screw hole 15. The head portion of the screw 16 protrudes into the slot 10. In this way, an adjustment mechanism is formed by the screw hole 15 and screw 16, so that the range of movement of the wire anchoring member 11 inside the slot 10 can be adjusted by adjusting the amount of protrusion of the screw 16 into the slot 10.

A return spring 17 is installed around the centre of rotation of the operating lever 3. One end of this return spring 17 is anchored to the bracket 2, while the other end is anchored to the operating lever 3. Return spring 17 causes the operating lever 3 to be constantly driven toward its initial attitude (i.e. the attitude indicated by the solid line in Figure 1).

The operation of the above device will be described with reference to Figure 2. As shown in Figure 2, the centre line of the brake wire 5 is W, the centre line of the slot 10 (with respect to the width of the slot) is S, and the angle formed by the centre lines W and S is θ. When the operating lever 3 is not being operated, the pin 12 of the wire anchoring member 11 (hereafter referred to simply as the "wire anchoring member 11") is positioned at the most distant position from the centre of rotation C inside the slot 10, as shown by the solid lines in Figures 1 and 2. In this state, as is shown in Figure 1, the lever ratio is L/h₀, where L is the distance from the centre of rotation C to the operating position (with respect to the operating lever 3) and h₀ is the distance from the centre of rotation C to the position of the wire anchoring member 11. This lever ratio L/h₀ is the smallest lever ratio that can be adopted by the present device. Furthermore, the angle θ formed by the centre line W and the centre line S is an obtuse angle.

When the operating lever 3 is pulled toward the handlebar 1, the brake wire 5 is pulled so that the brake shoes approach the rim of the wheel. In this case, the angle θ in Figure 2 approaches 90 degrees. Until θ reaches 90 degrees, the wire anchoring member 11 remains positioned at one end of the slot 10. Accordingly, the lever ratio is small and the brake wire pulling rate is large. As the operation of the operating lever 3 is continued so that θ reaches and then exceeds 90 degrees, the wire anchoring member 11 moves along the slot 10 toward the centre of rotation C. Then, when the wire anchoring member 11 contacts the tip of the screw 16, this movement stops. If the distance between the wire anchoring member 11 and centre of rotation C at this point is taken as h (as shown in Figure 1), then the lever ratio in this state is L/h. Since h<h₀, the lever ratio in the latter half of the braking operation is greater than the initial lever ratio. Accordingly, in this latter half of the braking operation, a large braking force can be obtained by applying a small operating force.

Another advantage of the different brake cable pulling rates and lever ratios is that the clearance between the brake shoes and the wheel rim may be maximised in the inoperative state while still providing a large mechanical advantage when the brake shoes contact the rim. Greater clearance between the brake shoes and the wheel rim facilitates assembling the wheel to the frame and accommodates wheels that wobble or are not perfectly true. The large cable pulling rate during initial operation of the brake lever effectively takes up the large clearance between the brake shoes and the wheel rim, and the large lever ratio during the latter phase of operation of the brake lever provides the desired braking force to the wheel rim. All of this is accomplished without requiring a larger lever stroke.

Next, in cases where the operating force is to be altered, the screw 16 is adjusted so that the amount of protrusion of the screw 16 into the slot 10 is altered. This adjustment makes it possible to adjust h in Figure 1, so that the final lever ratio in the operating process (hereafter referred to as the "final lever ratio") can be freely varied as desired by the operator, etc. Specifically, if the amount of protrusion of the screw 16 into the slot 10 is increased, h becomes relatively larger, so that the final lever ratio becomes relatively smaller. In this case, the wire pulling rate becomes relatively large, but the required operating force becomes heavier. Conversely, if the amount of protrusion of the screw 16 into the slot 10 is reduced, h becomes relatively smaller, so that the final lever ratio becomes relatively larger. In this case, a large braking force can be obtained by applying a small operating force.

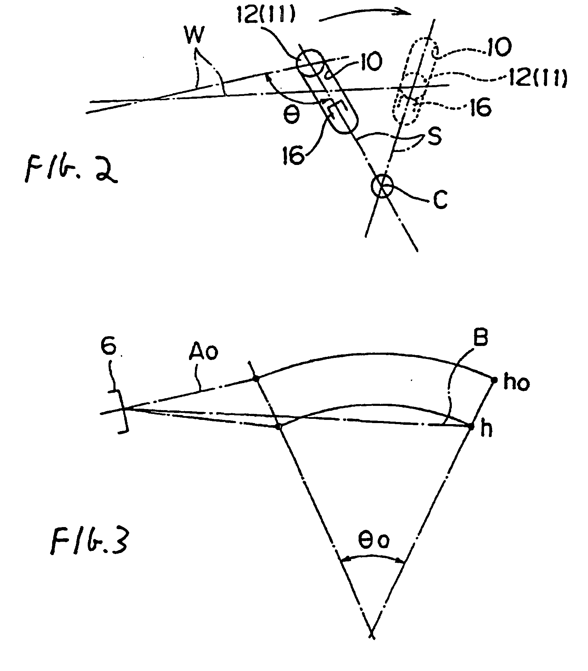

The brake wire pulling rate will be described with reference to Figure 3. In Figure 3, the overall operating angle of the operating lever is θ₀. In this case, when the wire anchoring member 11 moves during the braking operation and stops in the position of h (h representing the distance between the wire anchoring member 11 and the centre of rotation C), the final amount of protrusion of the brake wire 5 from the supporting member 6 is B. Furthermore, the amount of protrusion of the brake wire 5 from the supporting member 6 in the initial state prior to the initiation of the braking operation is A₀. In this case, the brake wire pulling rate is (B - A₀).

As is clear from the above description, a large brake wire pulling rate can be assured by minimising the amount of protrusion A₀ of the wire in the initial state. Specifically, in the initial state, the position of the wire anchoring member 11 inside the slot 10 is set so that the position is distant from the centre of rotation C. In this embodiment, the respective members are installed so that the centre line W and centre line S in Figure 2 are perpendicular half way through the braking operation, that is when the operating lever 3 is operated to an angle of half Oo.

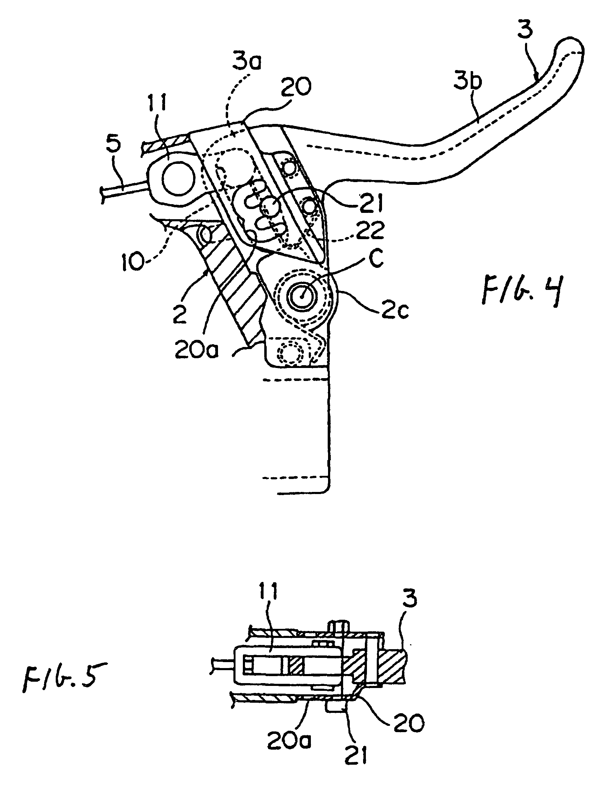

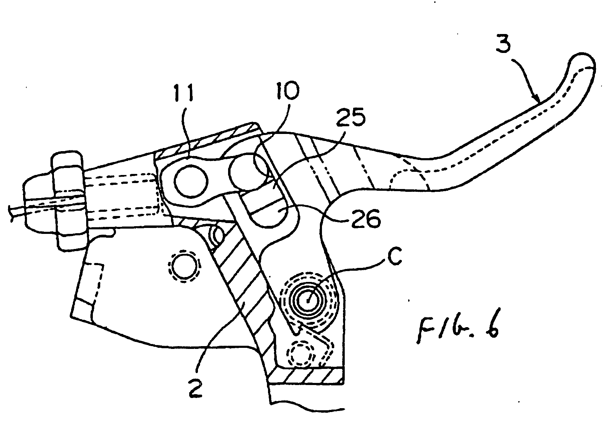

A second embodiment is illustrated in Figures 4 and 5. In this embodiment, only the adjustment mechanism which adjusts the range of movement of the wire anchoring member differs from that of the above mentioned first embodiment. The remaining structure is similar to that of the first embodiment. Accordingly, only the construction of the adjustment mechanism will be described below.

The adjustment mechanism in this embodiment includes a covering member 20 and a pin 21. Covering member 20 is mounted on the supporting portion 3a of the operating lever 3 so that the covering member 20 covers the slot 10 from the outside. The covering member 20 has a U-shaped cross section so that the covering member 20 can clamp the supporting portion 3a of the operating lever 3 from both sides. Respective "m"-shaped positioning grooves 20a are formed in both side surfaces of the covering member 20. The respective end portions of the grooves 20a act as positioning portions. The pin 21 is mounted so that it passes through the "m"-shaped grooves 20a formed in both side surfaces of the covering member 20, and through the slot 10, and so that the pin 21 can move through the "m"-shaped positioning grooves 20a. Furthermore, a fastening spring 22 is provided so that the pin 21 can be maintained in the respective positioning portions located in the end portions of the grooves 20a.

In this embodiment, the pin 21 moves through the grooves 20a, and is positioned in the respective end portions of the grooves 20a. As a result, the range of movement of the wire anchoring member 11 inside the slot 10 can be adjusted in three steps. Specifically, when the pin 21 is fastened in place in the end portions of the "m"-shaped positioning grooves 20a that are farthest from the centre of rotation C, h in the first embodiment has the largest value, so that the final lever ratio has the smallest value in the adjustable range of values. On the other hand, when the pin 21 is positioned closest to the centre of rotation, h has the smallest value, so that the final lever ratio has the maximum value. Thus, the final lever ratio can be adjusted in a simple manner merely by moving the pin 21. Furthermore, if the covering member 20 is replaced by a covering member which has different grooves, the final lever ratio can be adjusted using a different adjustment pattern.

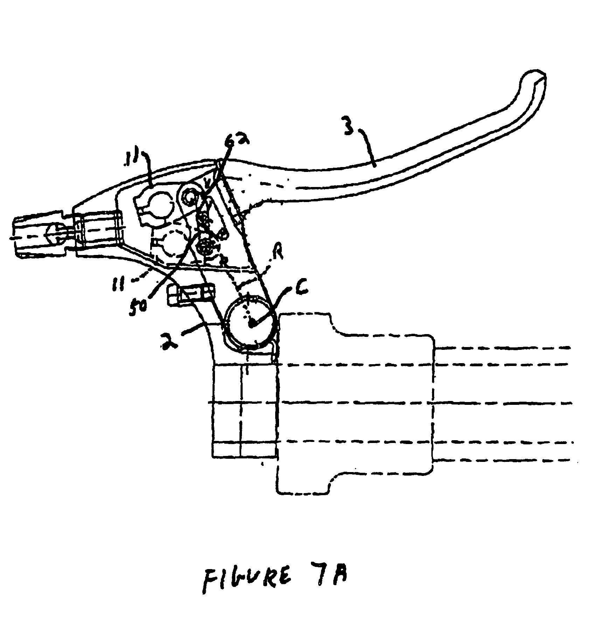

Figure 6 illustrates a third embodiment. In this embodiment, only the adjustment mechanism differs from that of the first embodiment. The remaining structure is similar to that of the first embodiment. The adjustment mechanism in this embodiment is a stopper formed from two resin members 25, 26 which are inserted into the slot 10 of the operating lever 3. These resin member 25, 26 possess resiliency, and have a width which is greater than the width of the slot 10 prior to the insertion of the resin members 25, 26 into the slot 10. These resin members 25, 26 are fastened in prescribed positions inside the slot 10 by being pushed into the slot 10 so that the range of movement of the wire anchoring member 11 inside the slot 10 may be adjusted.

If both of the two resin members 25, 26 are inserted into the slot 10, the range of movement of the wire anchoring member 11 is extremely restricted. Specifically, this range of movement consists of the total range obtained by combining the slight gap between the wire anchoring member li and the resin member 25, and the amount of elastic deformation of both resin members 25, 26 that occurs when the wire anchoring member 11 contacts the resin members 25, 26. In this case, h in the embodiment is large, so the final lever ratio is small. This ensures a sufficient wire pulling rate. If the resin member 25 is removed, the range of movement of the wire anchoring member 11 is increased, so that the final lever ratio becomes relatively larger. In this case, a large braking force can be obtained by applying a small operating force.

In this embodiment, the adjustment mechanism can be realised using simple portions. Furthermore, by preparing various types of resin members, it is possible to alter the operating force and stroke in a simple and inexpensive manner.

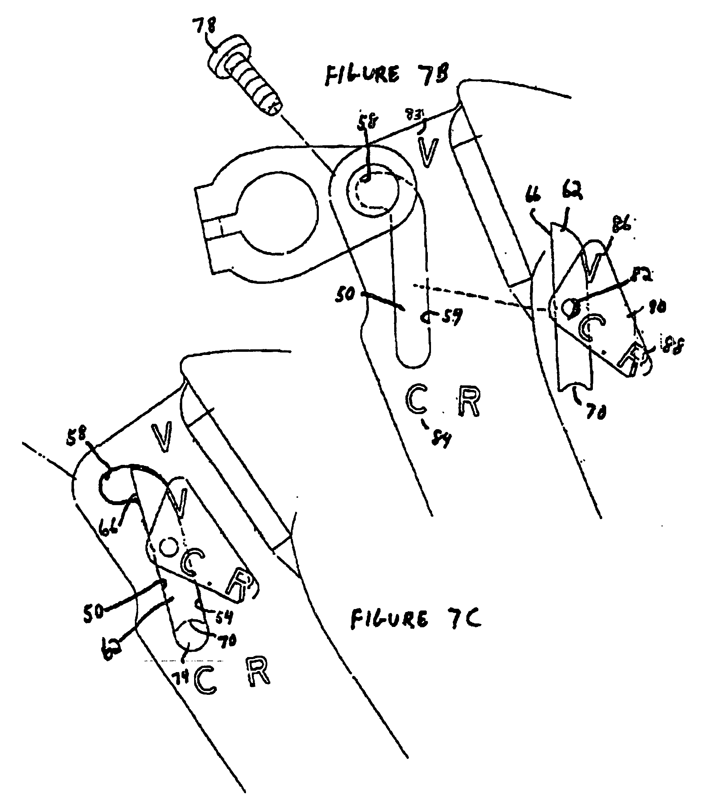

Figures 7A-7C are views of an embodiment of a brake operating device according to the present invention. In this embodiment, a slot 50 has a straight first slot portion 54 and an angled second slot portion 58 disposed at an upper end of first slot portion 54. First slot portion 54 is formed at an angle to an axis R extending radially from the centre of rotation C, but such an angled orientation is not necessary, and first slot portion 54 may align with the axis R as with the other embodiments, if desired. An adjustment mechanism in the form of a rigid stopper 62 may be removably fitted within slot 50. More specifically, stopper 62 is disposed within first slot portion 54 and includes a first surface 66 for preventing anchoring member 11, when anchoring member is disposed within second slot portion 58, from entering first slot portion 54. As a result, anchoring member 11 is retained within second slot portion 58, as shown in solid lines in Figure 7A. In this embodiment, second slot portion 58 is sized so that anchoring member 11 does not move along the path of the slot when retained therein. Similarly, stopper 62 includes a second surface 70 for defining a retaining opening 74 which retains anchor member 11 at the lower end of the first slot portion 54 as shown in broken lines in Figure 7A. In this embodiment, as with second slot portion 58, retaining opening 74 is sized so that anchoring member 11 does not move along the path of the slot when retained within retaining opening 74. If desired, stopper 62 may be retained to brake lever 3 through a retaining screw 78 which threads into an opening 82 in stopper 62, or else stopper 62 may be formed to frictionally fit within first slot portion 54.

This embodiment is very useful because the same brake lever design may be used with different brake mechanisms. For example, stopper 62 may be removed so that brake lever 3 operates like the previous embodiments, which is advantageous in cantilever or roller brake devices where both large brake shoe spacing and high lever operating forces are desired. When stopper 62 is inserted into slot 50, the brake lever has a set operating force to accommodate users who may dislike variable operating forces or when variable operating forces are not needed. For example, if anchoring member 11 is retained at the upper end of slot 50, then a smaller lever operating force results, which is desirable in brake devices which have long brake arms and the cable pulling force is applied to the ends of the brake arms at right angles to the brake arms. If anchoring member 11 is retained to the lower end of slot 50, then a larger lever operating force results, which is desirable in brake devices which have small brake arms or a low mechanical advantage at the brake arms. To facilitate the selection, markings 83 and 84 may be positioned at the upper and lower ends, respectively, of slot 50. Similar markings 86 and 88 may be positioned on an optical retaining tab 90 which may mate with screw 78 to sandwich stopper 62 within slot 50. Such markings help to ensure that stopper 62 is assembled by the user correctly with slot 50. Of course, such markings may be made directly on the stopper 62, if desired.

While the above is a description of an embodiment of the present invention, further modifications may be employed without departing from the scope of the present invention. For example, although in the described embodiment of Figures 7A to 7C the stopper 62 is shown as simultaneously providing upper and lower openings in the slot 50, a stopper could be provided, for use with an appropriately shaped slot, so that only one opening is provided but so that renewal and reorientation of the stopper would effectively move the opening to the other end of the slot. Alternatively, two stopper elements could be provided, the first stopper element being adapted to provide an opening at the upper end of the slot and the second stopper element being adapted to provide an opening at the lower end of the slot. A user could then effectively position the opening by selecting and inserting the appropriate stopper element. Furthermore, in the embodiments described above, the system was designed so that the final position of the wire anchoring member in the brake operating process was adjusted. However, it would also be possible to adjust the initial position of the wire anchoring member. Thus, the scope of the invention should not be limited by the specific structures disclosed. Instead, the true scope of the invention should be determined by the following claims. Of course, although labelling symbols are used in the claims in order to facilitate reference to the figures, the present invention is not intended to be limited to the constructions in the appended figures by such labelling.

## Claims

1. A bicycle brake operating device for operating a force transmission element (5) that is used to control a brake device, the bicycle brake operating device comprising:
a bracket (2) for attachment to the bicycle;
an operating lever (3) pivotally supported on the bracket (2) about a pivot point (C);
a slot (50) defining a path that extends toward the pivot point (C);
an anchoring member (11) connectable to the force transmission element (5) and disposed for movement along the path of the slot (50) during operation of the operating lever (3); and
a stopper (62) adapted to be disposed in the slot (50), **characterised in that** the stopper (62) is adapted to define a first retaining opening at a first end (58) of the slot (50) for retaining the anchoring member (11) towards the first end (58) of the slot (50) and **in that** the stopper (62) is adapted to define a second retaining opening (74) at a second end of the slot (50) for retaining the anchoring member (11) towards the second end of the slot (50).

2. A device according to claim 1, wherein the stopper (62) is adapted to simultaneously define the first and second retaining openings (74).

3. A device according to either preceding claim, wherein the stopper (62) comprises
a first stopper element adapted to be disposed in the slot (50), wherein the first stopper element is adapted to define the first retaining opening at the first end (58) of the slot (50) for retaining the anchoring member (11) towards the first end (58) of the slot (50); and
a second stopper element adapted to be disposed in the slot (50), wherein the second stopper element is adapted to define the second retaining opening (74) at a second end of the slot (50) for retaining the anchoring member (11) towards the second end of the slot (50).

4. A device according to any preceding claim, wherein the device includes a fastener (78) for retaining the stopper (62) within the slot (50).

5. A device according to any preceding claim, wherein the slot (50) is inclined relative to an axis (R) extending radially from the pivot point (7).

6. A device according to any preceding claim, wherein the slot (50) includes a straight first slot portion (54) and an angled second slot portion (58).

7. A device according to claim 6, wherein the angled slot portion (58) is disposed at an end of the first slot portion (54).

8. A device according to either claim 6 or claim 7, wherein the angled slot portion (58) is disposed substantially perpendicular to the first slot portion (54).

9. A device according to any one of claims 6 to 8 wherein the angled slot portion (58) is short compared to the first slot portion (54).

10. A device according to any one of claims 5 to 9, wherein the stopper (62) is adapted to be disposed in the first slot portion (54) and to define with the second slot portion (58) a retaining opening for retaining the anchoring member (11) in the second slot portion (58).

11. A device according to any preceding claim wherein the stopper (62) is formed from a resin material.

12. A device according to any preceding claim, wherein the operating lever (3) defines the slot (50).

13. A device according to any preceding claim, wherein the slot (50) is substantially L-shaped.

## Patentansprüche

1. Eine Fahrrad-Bremsbetätigungsvorrichtung zur Betätigung eines Kraftübertragungselementes (5), das zur Kontrolle einer Bremsvorrichtung verwendet wird, wobei die Fahrrad-Bremsbetätigungsvorrichtung umfasst:
eine Halterung zur Montage am Fahrrad;
einen Betätigungshebel (3), der auf der Halterung (2) um einen Drehpunkt (C) drehbar gelagert ist;
einen Spalt (50), der eine sich in Richtung Drehpunkt (C) erstreckende Bahn definiert;
ein Befestigungsteil (11), welches mit dem Kraftübertragungselement (5) verbindbar und für eine Bewegung entlang der Bahn des Spaltes (50) während der Betätigung des Betätigungshebels (3) vorgesehen ist, und
einen Stopper (62), der derart ausgebildet ist, dass er in dem Spalt (50) angeordnet werden kann, **dadurch gekennzeichnet, dass**
der Stopper (62) derart ausgebildet ist, dass er an einem ersten Ende (58) des Spaltes (50) eine erste Halteöffnung definiert, um das Befestigungsteil (11) in Richtung des ersten Endes (58) des Spaltes (50) zu halten, und dass der Stopper (62) derart ausgebildet ist, dass er an einem zweiten Ende des Spaltes (50) eine zweite Halteöffnung (74) definiert, um das Befestigungsteil (11) in Richtung des zweiten Endes des Spaltes (50) zu halten.

2. Eine Vorrichtung gemäß Anspruch 1, **dadurch gekennzeichnet, dass** der Stopper (62) derart ausgebildet ist, dass er gleichzeitig die erste und die zweite Halteöffnung (74) definiert.

3. Eine Vorrichtung gemäß einem der beiden vorhergehenden Ansprüche, **dadurch gekennzeichnet, dass** der Stopper (62) einen ersten Stopperteil, der derart ausgebildet ist, dass er in dem Spalt (50) angeordnet werden kann, wobei der erste Stopperteil derart ausgebildet ist, dass er am ersten Ende (58) des Spaltes (50) die erste Halteöffnung definiert, um das Befestigungsteil (11) in Richtung des ersten Endes (58) des Spaltes (50) zu halten; und
einen zweiten Stopperteil, der derart ausgebildet ist, dass er in dem Spalt (50) angeordnet werden kann, wobei der zweite Stopperteil derart ausgebildet ist, dass er am zweiten Ende des Spaltes (50) die zweite Halteöffnung (74) definiert, um das Befestigungsteil (11) in Richtung des zweiten Endes des Spaltes (50) zu halten, umfasst.

4. Eine Vorrichtung nach einem der vorhergehenden Ansprüche, **dadurch gekennzeichnet, dass** die Vorrichtung einen Feststeller (78) umfasst, um den Stopper (62) in dem Spalt (50) zu halten.

5. Eine Vorrichtung nach einem der vorhergehenden Ansprüche, **dadurch gekennzeichnet, dass** der Spalt (50) relativ zu einer sich radial von dem Drehpunkt (7) erstreckenden Achse (R) geneigt ist.

6. Eine Vorrichtung nach einem der vorhergehenden Ansprüche, **dadurch gekennzeichnet, dass** der Spalt (50) einen ersten geraden Spaltteil (54) und einen zweiten abgewinkelten Spaltteil (58) umfasst.

7. Eine Vorrichtung nach Anspruch 6, **dadurch gekennzeichnet, dass** der abgewinkelte Spaltteil (58) an einem Ende des ersten Spaltteiles (54) angeordnet ist.

8. Eine Vorrichtung nach einem der Ansprüche 6 oder 7, **dadurch gekennzeichnet, dass** der abgewinkelte Spaltteil (58) im wesentlichen senkrecht zu dem ersten Spaltteil (54) angeordnet ist.

9. Eine Vorrichtung nach einem der Ansprüche 6 bis 8, **dadurch gekennzeichnet, dass** der abgewinkelte Spaltteil (58) im Vergleich zu dem ersten Spaltteil (54) kurz ist.

10. Eine Vorrichtung nach einem der Ansprüche 5 bis 9, **dadurch gekennzeichnet, dass** der Stopper (62) derart ausgebildet ist, dass er in dem ersten Spaltteil (54) angeordnet werden kann und dass er mit dem zweiten Spaltteil (58) eine Halteöffnung definiert, um das Befestigungsteil (11) in dem zweiten Spaltteil (58) zu halten.

11. Eine Vorrichtung nach einem der vorhergehenden Ansprüche, **dadurch gekennzeichnet, dass** der Stopper (62) aus einem Kunstharzmaterial hergestellt ist.

12. Eine Vorrichtung nach einem der vorhergehenden Ansprüche, **dadurch gekennzeichnet, dass** der Betätigungshebel (3) den Spalt (50) definiert.

13. Eine Vorrichtung nach einem der vorhergehenden Ansprüche, **dadurch gekennzeichnet, dass** der Spalt (50) im wesentlichen L-förmig ist.

## Revendications

1. Dispositif d'actionnement d'un frein de bicyclette pour actionner un élément de transmission de force (5) qui est utilisé pour commander un dispositif de frein, le dispositif d'actionnement du frein de bicyclette comprenant :
une console (2) destinée à être fixée à la bicyclette;
un levier d'actionnement (3) supporté de manière à pouvoir pivoter par la console (2) autour d'un point de pivotement (C) ;
une fente (50) définissant un trajet qui s'étend en direction du point de pivotement (C);
un élément d'ancrage (11) pouvant être raccordé à l'élément de transmission de force (5) et disposé de manière à se déplacer le long du trajet de la fente (50) pendant l'actionnement du levier d'actionnement (3); et
un dispositif d'arrêt (60) adapté pour être disposé dans la fente (50);
**caractérisé en ce que** le dispositif d'arrêt (62) est adapté pour définir une première ouverture de retenue dans une première extrémité (58) de la fente (50) pour retenir l'élément d'ancrage (11) en direction de la première extrémité (58) de la fente (50) et **en ce que** le dispositif d'arrêt (62) est adapté pour définir une seconde ouverture de retenue (74) au niveau d'une seconde extrémité de la fente (50) pour retenir l'élément d'ancrage (11) en direction de la seconde extrémité de la fente (50).

2. Dispositif selon la revendication 1, dans lequel le dispositif d'arrêt (62) est adapté pour définir simultanément les première et seconde ouvertures de retenue (74).

3. Dispositif selon l'une quelconque des revendications précédentes, dans lequel le dispositif d'arrêt (62) comprend
un premier élément d'arrêt adapté pour être disposé dans la fente (50), le premier élément d'arrêt étant adapté pour définir la première ouverture de retenue dans la première extrémité (58) de la fente (50) pour retenir l'élément d'ancrage (11) en direction de la première extrémité (58) de la fente (50); et
un second élément d'arrêt adapté pour être disposé dans la fente (50), le second élément d'arrêt étant adapté pour définir la seconde ouverture de retenue (74) à une seconde extrémité de la fente (50) pour retenir l'élément d'ancrage (11) en direction de la seconde extrémité de la fente (50).

4. Dispositif selon l'une quelconque des revendications précédentes, dans lequel le dispositif inclut un organe de fixation (78) pour retenir le dispositif d'arrêt supérieur (62) dans la fente (50).

5. Dispositif selon l'une quelconque des revendications précédentes, dans lequel la fente (50) est inclinée par rapport à un axe (R) qui s'étend radialement à partir du point de pivotement (7).

6. Dispositif selon l'une quelconque des revendications précédentes, dans lequel la fente (50) inclut une première partie rectiligne (54) et une seconde partie oblique (58).

7. Dispositif selon la revendication 1, dans lequel la partie inclinée (58) de la fente est disposée à une extrémité de la première partie (54) de la fente.

8. Dispositif selon l'une ou l'autre de la revendication 6 et de la revendication 7, dans lequel la partie inclinée (58) de la fente est disposée essentiellement perpendiculairement à la première partie (54) de la fente.

9. Dispositif selon l'une quelconque des revendications 6 à 8, dans lequel la partie inclinée (58) de la fente est courte par rapport à la première partie (54) de la fente.

10. Dispositif selon l'une quelconque des revendications 5 à 9, dans lequel le dispositif d'arrêt (62) est adapté pour être disposé dans la première partie (54) de la fente et définir avec la seconde partie (58) de la fente une ouverture de retenue servant à retenir l'élément d'ancrage (11) dans la seconde partie (58) de la fente.

11. Dispositif selon l'une quelconque des revendications précédentes, dans lequel le dispositif d'arrêt (62) est réalisé en un matériau formé d'une résine.

12. Dispositif selon l'une quelconque des revendications précédentes, dans lequel le levier d'actionnement (3) définit la fente (50).

13. Dispositif selon l'une quelconque des revendications précédentes, dans lequel la fente (50) est agencée essentiellement en forme de L.
